# FASCICULE DE BREVET EUROPEEN

(11) **EP 2 592 253 B1**
(45) Date de publication et mention de la délivrance du brevet: **07.01.2015**
(21) Numéro de dépôt: 12191701.7
(22) Date de dépôt: 07.11.2012
(51) Int. Cl.: F02C 9/28, F02D 45/00

(54) **Système de régulation numérique à pleine autorité pour moteur d'aéronef**
FADEC für einen Flugzeugtriebwerk
FADEC for aeroengine

(30) Priorité: 08.11.2011 FR 1103400
(43) Date de publication de la demande: 15.05.2013
(73) Titulaire: Thales, 92200 Neuilly Sur Seine (FR)
(72) Inventeur: Genevrier, Gilles, 26027 Valence (FR); Bresson, Claude, 92362 Meudon la Foret Cedex (FR)
(74) Mandataire: Jacobson, Claude

(56) Documents cités:
- GB-A- 2 355 081
- US-A1- 2005 217 274

## Description

La présente invention concerne un système de régulation numérique à pleine autorité pour moteur d'aéronef.

De tels systèmes de régulation sont également connus sous le nom de FADEC pour « Full Authority Digital Engine Control », et sont destinés à réguler le moteur en contrôlant l'admission par exemple de carburant dans un moteur tel qu'une turbine d'hélicoptère ou tout autre type de moteurs comme par exemple un réacteur, un turbopropulseur, etc., destinés à un autre type d'aéronefs comme par exemple un avion, un dirigeable, etc ...

En fait et de façon générale, ces systèmes entrent dans le domaine des unités de contrôle électronique de moteurs et en particulier de turbines d'hélicoptères, également connues sous le nom de EECU pour « Electronic Engine Control Unit ».

De façon classique, ces systèmes de régulation sont raccordés d'une part à des moyens de régulation de divers paramètres de fonctionnement du moteur, tels l'arrivée de carburant, l'arrivée d'air, et d'autre part à des moyens formant capteurs de vitesse disposés sur le moteur.

En règle générale, ils comportent au moins deux unités électroniques de régulation redondantes raccordées à ces moyens formant capteur de vitesse de rotation du moteur et un dispositif de commutation entre l'une ou de l'autre de ces unités en fonction de leur état de fonctionnement, tel que décrit par exemple dans le document GB 2355081.

En effet les constructeurs et les règles imposent aux fournisseurs d'équipements de ce type un certain nombre d'exigences en matière de sûreté de fonctionnement.

Ces exigences se traduisent par exemple par des paramètres comme le MTBF pour « Mean Time Between Failure », le taux de panne/heure de vol, etc...

Pour certains des FADEC mentionnés précédemment, l'une des exigences de base est de disposer de deux unités électroniques de régulation redondantes pour la régulation de l'admission de carburant dans le moteur, ce qui permet alors de poursuivre la régulation de ce moteur en cas de défaillance de l'une des unités.

Ainsi, si l'unité électronique de régulation en fonction courante tombe en panne, le dispositif de commutation déclenche alors le basculement de la régulation de cette unité électronique de régulation défaillante sur l'unité électronique de régulation redondante.

Toutefois, de tels dispositifs ne donnent pas entière satisfaction. En effet, le basculement entre les unités électroniques de régulation ne se fait que si l'unité électronique de régulation défaillante se déclare fautive au dispositif de commutation ou si le pilote de l'aéronef détecte cette défaillance et commande lui-même le basculement.

Ainsi les FADEC à double unité électronique de régulation peuvent se trouver en défaut si l'unité électronique de régulation en fonction courante s'avère défaillante sans le détecter et/ou sans l'indiquer au dispositif de commutation du FADEC.

Dans ce cas le contrôle moteur n'est pas transféré à l'unité électronique de régulation redondante et le pilote ne peut effectuer ce basculement manuellement que s'il identifie suffisamment rapidement l'origine du problème.

Si ce n'est pas le cas on risque alors un emballement du moteur ou au contraire une perte de puissance voire une extinction de celui-ci.

La plupart des FADEC de ce type dispose également fréquemment d'un système de protection électronique contre les survitesses (SPECS) pour la coupure d'urgence de la turbine pour éviter la détérioration de celle-ci, ce système étant également connu sous le nom de EOSPS pour « Electronic Over Speed Protection System ».

Dans le premier scénario envisagé ci-dessus, le système de protection électronique provoque alors la coupure de la turbine sans possibilité de redémarrer celle-ci et l'on conçoit que cette situation peut avoir des répercussions graves.

Un but de l'invention est donc d'obtenir un système de régulation numérique à pleine autorité pour moteur d'aéronef présentant une sûreté de fonctionnement et une disponibilité améliorées.

A cet effet, l'invention a pour objet un système de régulation numérique pour moteur d'aéronef du type comprenant :
- deux unités électroniques de régulation redondantes pour la régulation du moteur de l'aéronef, chaque unité électronique de régulation étant adaptée pour déterminer une mesure de vitesse de rotation du moteur à partir d'un signal de sortie d'un capteur de vitesse de régulation respectif représentatif de la vitesse de rotation du moteur,
- une unité de sélection pour la sélection de l'une ou l'autre des unités électroniques de régulation pour la régulation du moteur en fonction d'un état de fonctionnement des unités électroniques de régulation,
- un système de protection électronique contre les survitesses pour la protection du moteur de l'aéronef contre les survitesses, à partir du signal de sortie d'au moins un capteur de vitesse de protection respectif représentatif de la vitesse de rotation du moteur,
**caractérisé en ce que** l'unité de sélection comprend un module de surveillance adapté pour déterminer une mesure de vitesse de rotation du moteur à partir du signal de sortie du ou de chaque capteur de vitesse de protection et pour comparer la ou chaque mesure de vitesse déterminée par le module de surveillance avec les mesures de vitesses fournies par chaque unité électronique de régulation pour déterminer un état de fonctionnement de chaque unité électronique de régulation.

Selon d'autres aspects de l'invention, le système de régulation numérique pour moteur d'aéronef comprend l'une ou plusieurs des caractéristiques suivantes, prise(s) seule(s) ou selon toute(s) combinaison(s) techniquement possible(s) :
- le module de surveillance comprend un module de mesure respectif associé à chaque unité électronique de régulation et adapté pour déterminer une mesure de vitesse de rotation du moteur à partir du signal de sortie d'au moins un capteur de vitesse de protection, le module de surveillance étant adapté pour comparer la mesure de vitesse fournie par chaque unité électronique de régulation avec la ou chaque mesure de vitesse déterminée par le module de mesure associé ;
- le module de surveillance est adapté pour inhiber la sélection d'une unité électronique de régulation si l'unité électronique de régulation ne lui fournit pas de mesure de vitesse ;
- le module de surveillance est adapté pour inhiber la sélection d'une unité électronique de régulation si la mesure de vitesse fournie par l'unité électronique de régulation au cours d'une période de temps de mesure P n'est pas reçue par l'unité de sélection au bout d'une durée prédéterminée ε après le début d'une nouvelle période de temps de mesure P, ε valant 1 ms par exemple ;
- le module de surveillance est adaptée pour inhiber la sélection d'une unité électronique de régulation si la mesure de vitesse fournie par l'unité électronique de régulation n'est pas cohérente de deux mesures de vitesse déterminées par l'unité de sélection à partir des signaux de sortie des capteurs de vitesse de protection, alors que les mesures de vitesse déterminées par l'unité de sélection sont cohérentes entre elles ;
- une mesure de vitesse V1 est cohérente d'une autre mesure de vitesse V2 si (1 - δ) ** V*2 ≤ *V*1 ≤ (1 + δ) **V*2, δ valant 0,1 par exemple ;
- le module de surveillance est adapté pour comparer les signaux de sortie des capteurs de vitesse de régulation et les signaux de sortie du ou de chaque capteur de vitesse de protection de manière à vérifier le fonctionnement des capteurs de vitesse de régulation et/ou du ou de chaque capteur de vitesse de protection ;
- le module de surveillance est actif pour inhiber la sélection de chaque unité électronique de régulation seulement lorsqu'un nombre prédéfini M de mesures de vitesse déterminées par le module de surveillance sont représentatives d'une vitesse de rotation du moteur supérieure à un seuil prédéterminé, par exemple une fraction d'une vitesse de rotation nominale du moteur, notamment 40% ;
- l'unité de sélection comprend un mode de test pour tester module de surveillance, dans lequel les unités électroniques de régulation transmettent au module de surveillance des signaux de test à la place de mesures de vitesse ;
- le mode de test est mis en oeuvre uniquement lorsque les mesures de vitesse déterminées par le module de surveillance et les mesures de vitesse déterminées par les unités électroniques de régulation sont représentatives d'une vitesse de rotation inférieure à un seuil de vitesse de rotation, par exemple une fraction d'une vitesse de rotation nominale du moteur, notamment 25% ;
- l'unité de sélection est paramétrable ;
- le système de protection contre les survitesses comprend deux voies de pilotage redondantes pour la commande du système de protection contre les survitesses, chaque voie de pilotage comprenant au moins un module de mesure de la vitesse du moteur à partir des sorties des capteurs de vitesse de protection, le module de surveillance délivrant une information d'état de fonctionnement du système de protection contre les survitesses à partir des sorties des modules de mesure ;
- l'aéronef est un hélicoptère ;
- le moteur comprend étage de turbine à gaz et/ou un étage de turbine libre ; et
- le moteur comprend deux étages de turbine, chaque unité électronique de régulation étant adaptée pour déterminer une mesure de vitesse de rotation de chaque étage de turbine à partir d'un signal de sortie d'au moins un capteur de vitesse de régulation respectif représentatif de la vitesse de rotation respectivement de chaque étage de turbine du moteur, le système de protection électronique contre les survitesses réalisant la protection du moteur de l'aéronef à partir du signal de sortie d'au moins un capteur de vitesse de protection respectif représentatif de la vitesse de rotation respectivement de chaque étage de turbine du moteur, le module de surveillance étant adapté pour déterminer une mesure de vitesse de rotation de chaque étage de turbine du moteur à partir du signal de sortie du ou de chaque capteur de vitesse de protection et pour comparer la ou chaque mesure de vitesse déterminée par le module de surveillance avec les mesures de vitesses fournies par chaque unité électronique de régulation pour déterminer un état de fonctionnement de chaque unité électronique de régulation.

L'invention sera mieux comprise à l'aide de la description qui va suivre, donnée uniquement à titre d'exemple et faite en se référant aux figures annexées, sur lesquelles :
- la Figure 1 représente un schéma synoptique illustrant la structure et le fonctionnement d'un système de régulation numérique à pleine autorité pour moteur d'aéronef selon l'invention, et
- la Figure 2 représente un schéma synoptique illustrant la structure et le fonctionnement du système de régulation numérique à pleine autorité pour moteur d'aéronef selon une variante de l'invention.

Dans la présente description, le terme moteur doit être compris dans son sens général pour désigner par exemple une turbine, un étage de turbine, un réacteur, un turbopropulseur ou autres, destiné à équiper un aéronef, ce terme désignant également de façon générale par exemple un hélicoptère, un avion, un dirigeable ou autres.

En outre, l'expression « vitesse de rotation du moteur » se réfère de façon indifférenciée à la fréquence de rotation de celui-ci ou bien à sa période de rotation.

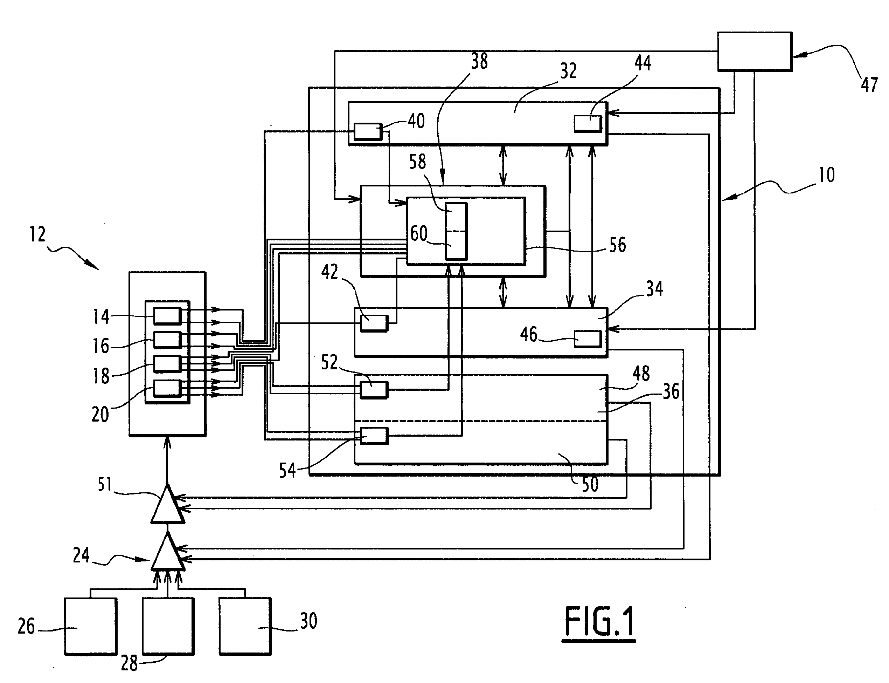

Le système de régulation numérique à pleine autorité 10 pour moteur 12 d'aéronef représenté sur la Figure 1, ci après « système de régulation », est raccordé en entrée à des capteurs de vitesse 14, 16, 18, 20 disposés sur le moteur 12 et en sortie à des moyens de régulation 24 des paramètres du moteur 12.

Chaque capteur de vitesse 14, 16, 18, 20 fournit un signal de sortie représentatif de la vitesse de rotation du moteur 12.

Dans l'exemple de la Figure 1, les capteurs 14, 16, 18, 20 utilisés sont des capteurs fréquentiels électromagnétiques associés chacun à une roue phonique qui transmettent aux organes du système de régulation 10 un signal fréquentiel représentatif de la vitesse de rotation d'un étage de turbine libre ou d'un étage de turbine à gaz que comprend le moteur 12.

Les paramètres régulés par les moyens de régulation 24 sont par exemple l'arrivée de carburant 26 dans le moteur 12, l'arrivée d'air 28, l'actionnement des accessoires discrets 30 associés au fonctionnement du moteur 12, etc.

Le système de régulation 10 comprend deux unités électroniques de régulation 32, 34 redondantes, un système de protection électronique contre les survitesses 36, ci-après SPECS 36, ainsi qu'une unité de sélection 38 pour la sélection de l'une ou l'autre des unités électroniques de régulation 32, 34 pour réguler le moteur 12.

Chacune des unités électroniques de régulation 32, 34, du SPECS 36 et de l'unité de sélection 38 est une unité autonome vis-à-vis des autres, possédant sa propre alimentation et sa propre unité de calcul.

Chaque unité électronique de régulation 32, 34 est propre à réguler seule le moteur 12.

Chaque unité électronique de régulation 32, 34 comprend un module de mesure 40, 42 pour la mesure de la vitesse de rotation du moteur 12 et un module d'auto-surveillance 44, 46.

En option, le module d'auto-surveillance 44, 46 de chaque unité électronique de régulation 32, 34 est un module à part entière auquel l'unité électronique de régulation 44, 46 est raccordée.

Chaque unité électronique de régulation 32, 34 est raccordée à l'unité de sélection 38, à l'autre unité électronique de régulation 32, 34, aux moyens de régulation 24 des paramètres du moteur et à un module externe 47.

Le module externe 47 est propre à émettre un signal de sélection externe à destination de l'unité de sélection 38 et des unités électroniques de régulation 32, 34. Ce signal prédétermine l'unité électronique de régulation 32, 34 en charge de la régulation du moteur 12 quand les deux unités électroniques de régulation 32, 34 sont aptes à réguler le moteur ou que l'unité de sélection 38 est défaillante, comme on le verra par la suite.

Le module de mesure 40, 42 de chaque unité électronique de régulation 32, 34 est raccordé à la sortie d'un capteur de vitesse 14, 16 respectif, ci après « capteur de vitesse 14, 16 de régulation ».

Le module de mesure 40, 42 de chaque unité électronique de régulation 32, 34 est adapté pour déterminer une mesure de vitesse à partir du signal de sortie du capteur de vitesse 14, 16 de régulation associé.

Comme illustré sur la Figure 1, le module de mesure 40 de la première unité électronique de régulation 32 est raccordé à la sortie du premier capteur de vitesse 14 de régulation et le module de mesure 42 de la deuxième unité électronique 34 de régulation est raccordé au deuxième capteur de vitesse 16 de régulation.

Le signal de sortie du capteur de vitesse 14, 16 de régulation est converti par le module de mesure 40, 42 associé en une mesure NTLx de la vitesse de rotation du moteur 12 valant NTLx= NTL /Nx, NTL étant la vitesse effective de rotation du moteur 12, et Nx un facteur de démultiplication dépendant du nombre de dents du capteur de vitesse 14, 16 de régulation correspondant.

En pratique, NTL est proportionnel à la vitesse de rotation d'un étage du moteur 12, comme décrit ci-dessus. NTL dépend donc de la démultiplication entre les vitesses de rotation des étages du moteur 12 et la vitesse de rotation de l'arbre du moteur 12 sur lequel le capteur est monté. Le paramètre Nx, quant à lui, est propre à une roue phonique que comprend le capteur.

A partir de cette mesure de vitesse, l'unité électronique de régulation 32, 34 en fonction régule le fonctionnement du moteur 12.

Dans le système de régulation 10 selon l'invention, les modules de mesure 40, 42 de la vitesse de chaque unité électronique de régulation 32, 34 sont également adaptés pour mesurer périodiquement avec une période P les vitesses T(NTLR1) et T(NTLR2) respectivement définies par :
T(NTLR1) = NmesR1*NTLR1/NDR1 et
T(NTLR2) = NmesR2*NTLR2/NDR2,
NmesR1 et NmesR2 étant les nombres d'espaces inter-dents des capteurs de vitesse 14, 16 de régulation sur lesquels sont réalisées les mesures, et NDR1 et NDR2 étant les ratios entre la période de rotation du moteur 12 et la période inter-dents du capteur de vitesse 14, 16 correspondant.

Ces mesures sont réalisées avec une horloge d'échantillonnage de fréquence suffisamment élevée pour obtenir des mesures d'une précision suffisante, par exemple 10Mhz, et avec une période P prise égale à 20ms par exemple.

Le module d'auto-surveillance 44, 46 de chaque unité électronique de régulation 32, 34 a pour fonction de délivrer une information d'état de l'unité électronique de régulation 32, 34 à l'unité de sélection 38.

Le module d'auto-surveillance 44, 46 est adapté pour délivrer à l'unité de sélection 38 des signaux indépendants pour signifier des causes de dysfonctionnement différentes, par exemple matérielles ou logicielles, ou pour signifier divers degrés d'indisponibilité, par exemple une capacité dégradée de régulation ou une incapacité totale de réguler.

Le système électronique de protection contre les survitesses 36 ou SPECS 36 est propre à vérifier que la vitesse de rotation du moteur 12 demeure inférieure à une vitesse maximale donnée.

La vitesse maximale de rotation est fournie par le constructeur et constitue une limite de fonctionnement au-delà de laquelle le moteur 12 peut être endommagé, possiblement de façon définitive.

Le SPECS 36 comprend deux voies de pilotage 48, 50 redondantes qui sont raccordées en sortie à un organe 51 de type électrovanne situé en aval des moyens de régulation 24. Cet organe 51 est propre à réaliser la coupure de l'arrivée de carburant 26 dans le moteur 12.

Chaque voie de pilotage 48, 50 comprend un module de mesure 52, 54 de la vitesse raccordé à la sortie des capteurs de vitesse 18, 20, ci-après « capteurs de vitesse 18, 20 de protection».

Comme illustré sur la Figure 1, chaque voie de pilotage 48, 50 est raccordée aux deux capteurs de vitesse 18, 20 de protection, distincts des capteurs de vitesse 14, 16 de régulation.

Si la vitesse de rotation du moteur 12 mesurée par les voies de pilotage 48, 50 du SPECS 36 dépasse la vitesse maximale, le SPECS 36 commande alors l'extinction du moteur 12 à l'organe 51, qui coupe alors l'arrivée de carburant 26.

L'unité de sélection 38 est propre à sélectionner l'une ou l'autre des unités électroniques de régulation 32, 34 en fonction des signaux d'état fournis par les modules d'auto-surveillance 44, 46 des unités électroniques de régulation 32, 34, du signal de sélection externe fourni par le module externe 47 et de la sortie d'un module de surveillance 56 qu'elle comprend, comme on le verra par la suite.

L'unité de sélection 38 est également propre à réaliser la surveillance des unités électroniques de régulation 32, 34.

Pour ce faire, elle comprend un module de surveillance 56 pour la surveillance des unités électroniques de régulation 32, 34.

Le module de surveillance 56 est propre à vérifier la cohérence des signaux de sortie émis par chacun des capteurs de vitesse 14, 16, 18, 20 et à surveiller le fonctionnement des unités électroniques de régulation 32, 34.

A cet effet, le module de surveillance 56 est raccordé en entrée aux sorties des capteurs de vitesse 14, 16 de régulation et des capteurs de vitesse 18, 20 de protection et aux sorties des modules de mesure 40, 42 de chaque unité électronique de régulation 32, 34. Le module de surveillance 56 comprend également deux modules de mesure 58, 60 pour mesurer la vitesse de rotation du moteur 12 raccordés à la sortie des capteurs de vitesse 18, 20 de protection, chaque module de mesure 58, 60 étant dédié à l'une des deux unités électroniques de régulation 32, 34.

D'une part, le module de surveillance 56 vérifie que les sorties des capteurs de vitesse 18, 20 de protection sont cohérentes avec les sorties des capteurs de vitesse 14, 16 de régulation, et par conséquent que les capteurs de vitesse 18, 20 de protection utilisés par le SPECS 36 fonctionnent.

D'autre part, le module de surveillance 56 surveille le fonctionnement des unités électroniques de régulation 32, 34 en réalisant cycliquement le diagnostique de chacune des unités électroniques de régulation 32, 34.

A cet effet, chaque module de mesure 58, 60 du module de surveillance 56 réalise des mesures de vitesse NTLS1 et NTLS2 de rotation du moteur 12 à partir des sorties des capteurs de vitesse 18, 20 de protection.

Pour chaque période de durée P, ces modules de mesure 58, 60 réalisent également la mesure des vitesses T(NTLS1) et T(NTLS2) respectivement définies par:
T(NTLS1) = NmesS1*NTLS1/NDS1, et
T(NTLS2) = NmesS2*NTLS2/NDS2,
NmesS1 et NmesS2 étant les nombres d'espaces inter-dents des capteurs de vitesse 18, 20 de protection sur lesquels sont réalisées les mesures, et NDS1 et NDS2 étant les ratios entre la période de rotation du moteur 12 et la période inter-dents du capteur de vitesse 18, 20 de protection correspondant.

Le module de surveillance 56 compare alors les vitesses T(NTLR1) et T(NTLR2) réalisées au cours d'une période P par les modules de mesure 40, 42 des unités électroniques de régulation 32, 34 avec les périodes T(NTLS1) et T(NTLS2) réalisées par les modules de mesure 58, 60 du module de surveillance 56.

Le fonctionnement du module de surveillance 56 va maintenant être décrit en rapport avec la première unité électronique de régulation 32.

Au cours d'une période P, le module de mesure 40 de la première unité électronique de régulation 32 réalise la mesure de la vitesse NTLR1 et de la vitesse T(NTLR1) correspondante à partir de la sortie du capteur de vitesse 14 de régulation auquel il est raccordé.

Au cours de cette même période, le module de mesure 58 associé à l'unité électronique de régulation 32 réalise les mesures de vitesse NTLS1 et NTLS2 et T(NTLS1) et T(NTLS2) correspondantes à partir de la sortie des capteurs de vitesse 18, 20 de protection auxquels il est raccordé.

A l'issue de cette période P, la mesure T(NTLR1) est communiquée par l'unité de calcul de l'unité électronique de régulation 32 au module de surveillance 56.

Le début de l'écriture par l'unité électronique de régulation 32 dans le module de surveillance 56 déclenche une nouvelle mesure de T(NTLR1) par l'unité électronique de régulation 32.

Une fois la mesure précédente T(NTLR1) entièrement communiquée au module de surveillance 56, celui-ci utilise la vitesse T(NTLR1) et les vitesses T(NTLS1) et T(NTLS2) mesurées au cours de la période précédente pour réaliser les comparaisons suivantes :
0.9*T(NTLS1) < T(NTLR1) < T(NTLS1)*1.1,
0.9*T(NTLS2) < T(NTLR1) < T(NTLS2)*1.1, et
0.9*T(NTLS1) < T(NTLS2) <T(NTLS1)*1.1.

Ces comparaisons sont des comparaisons dites « de cohérence », une mesure de vitesse V1 étant cohérente d'une mesure de vitesse V2 si (1 - δ) * *V*2 ≤ *V*1 ≤ (1 + δ) **V*2. Dans le mode de réalisation de la Figure 1, δ est pris égal à 0,1.

Si la première inégalité est vraie, la mesure NTLR1 est alors cohérente de la mesure NTLS1.

Si la deuxième inégalité est vraie, la mesure NTLR1 est alors cohérente de la mesure NTLS2.

Si la troisième inégalité est vraie, la mesure NTLS2 est alors cohérente de la mesure NTLS1.

Le module de surveillance 56 est propre à déclarer l'unité électronique de régulation 32 défaillante à l'unité de sélection 38 si :
- l'unité électronique de régulation 32 ne fournit pas de mesure NTLR1 au cours de la période P, ou
- NTLR1 n'est pas cohérente de NTLS1 ou NTLS2 alors que NTLS2 est cohérente de NTLS1 et que le capteur de vitesse 14 de régulation associé est fonctionnel, ou
- l'unité électronique de régulation 32 n'a pas communiqué la mesure T(NTLR1) réalisée au cours de la période précédente au bout d'un laps de temps ε après le début d'une nouvelle période de mesure.

Dans l'exemple de la Figure 1, ε est pris égal à 1 ms.

De la même manière, le module de surveillance 56 est adapté pour alors déclarer la deuxième unité électronique de régulation 34 défaillante à l'unité de sélection 38 si :
- l'unité électronique de régulation 34 ne fournit pas de mesure NTLR2 au cours de la période P, ou
- NTLR2 n'est pas cohérente de NTLS1 ou NTLS2 alors que NTLS2 est cohérente de NTLS1 et que le capteur de vitesse 16 de régulation est fonctionnel, ou
- l'unité électronique de régulation 34 n'a pas communiqué la mesure T(NTLR2) réalisée au cours de la période précédente au bout d'un laps de temps ε après le début d'une nouvelle période de mesure.

En déclarant une unité électronique de régulation 32, 34 défaillante, le module de surveillance 56 interdit la sélection de cette unité électronique de régulation 32, 34 et inhibe donc sa sélection par l'unité de sélection 38.

Lorsque le module de surveillance 56 n'inhibe pas la sélection d'une unité électronique de régulation 32, 34 et qu'aucune des unités électroniques de régulation 32, 34 ne s'auto-déclare défaillante, l'unité de sélection 38 sélectionne l'unité électronique de régulation 32, 34 prédéterminée par le signal de sélection externe qu'elle reçoit en provenance du module externe 47.

Lorsque le module de surveillance 56 déclare défaillante l'unité électronique de régulation 32, 34 couramment en fonction à l'unité de sélection 38, celle-ci commande la bascule de l'unité électronique de régulation 32, 34 en fonction vers l'unité électronique de régulation 32, 34 redondante si celle-ci est disponible.

Dans le cas où les deux unités électroniques de régulation 32, 34 sont défaillantes, l'unité électronique de régulation 32, 34 en fonction est déterminée par défaut par le signal de sélection externe émis par le module externe 47.

Le module de surveillance 56 dans un système de régulation 10 selon l'invention permet ainsi le diagnostique cyclique des unités électroniques de régulation 32, 34.

Ce diagnostique est réalisé de façon totalement indépendante des modules d'auto-surveillance 44, 46 de chacune des unités électroniques de régulation 32, 34.

Lors d'une défaillance silencieuse de l'unité électronique de régulation 32, 34 couramment au contrôle des moyens de régulation 24, le module de surveillance 56 détecte tout de même cette défaillance et l'unité de sélection 38 commande alors le basculement de la sélection vers l'unité électronique de régulation 32, 34 redondante : le système de régulation 10 selon l'invention ne se trouve ainsi plus en défaut lorsqu'une unité électronique de régulation 32, 34 est défaillante sans le déclarer à l'unité de sélection 38.

On conçoit alors que la robustesse et la disponibilité du système de régulation 10 selon l'invention sont considérablement augmentées.

En réalisant une surveillance cyclique des unités électroniques de régulation 32, 34, le module de surveillance 56 diagnostique simultanément la capacité des différentes unités de calcul du système de régulation 10 à réaliser les acquisitions de mesures, à faire des calculs élaborés et à réaliser une séquence complexe de tâches.

Afin de ne pas perturber le fonctionnement de l'unité de sélection 38, le module de surveillance 56 est propre à n'effectuer le diagnostique des unités électroniques de régulation 32, 34 que lorsque qu'un nombre M prédéfini de mesures consécutives des vitesses NTLS1 et NTLS2 sont supérieures à un pourcentage prédéfini de la vitesse de rotation du moteur 12. Ceci permet notamment d'empêcher le basculement d'une unité électronique de régulation 32, 34 vers l'unité redondante lorsque la turbine est en régime intermédiaire, par exemple lors de son allumage ou de son extinction.

Dans l'exemple de la Figure 1, ce pourcentage est pris égal à 40% de la vitesse nominale du moteur 12.

De façon à être adaptable à tous types de turbines et tous types de contraintes auxquelles un aéronef est susceptible d'être soumis, le module de surveillance 56 présente également un mode de paramétrage.

Ce mode est utilisé pour ajuster le fonctionnement du module de surveillance 56 à différents types de capteurs, à des capteurs fréquentiels présentant des caractéristiques différentes, à différentes contraintes en temps réel appliquées à l'avion, etc.

Ce mode de paramétrage autorise par exemple l'ajustement du seuil de vitesse en deçà duquel un mode de test de l'unité de sélection 38 peut être activé, comme on le verra par la suite, ou le nombre M de mesures successives des vitesses NTLS1 et NTLS2 nécessaire pour activer la surveillance des unités électroniques de régulation 32, 34.

En option, le module de surveillance 56 est également adapté pour surveiller les voies de pilotage 48, 50 du SPECS 36.

A cet effet, le module de surveillance 56 est raccordé aux sorties des modules de mesure 52, 54 de chacune des voies de pilotage 48, 50 du SPECS.

Les comparaisons de cohérence entre les mesures de vitesse effectuées par la voie de pilotage 48, 50 en cours de diagnostique et les mesures effectuées par les modules de mesure 58, 60 du module de surveillance 56 sont effectuées de la même manière que dans le cas d'une unité électronique de régulation 32, 34, un module de mesure 58, 60 étant dédié à chaque voie de pilotage 48, 50 du SPECS 36.

En fonction du résultat de ces comparaisons de cohérence, si l'une des voies de pilotage 48, 50 est diagnostiquée comme défaillante par le module de surveillance 56, celui-ci fournit alors au pilote ou au personnel de maintenance une information d'état de fonctionnement concernant le SPECS 36, par exemple qu'une des voies de pilotage 48, 50 est défaillante, que le SPECS 36 fonctionne en mode dégradé, qu'une maintenance est nécessaire, etc.

Il est à noter que les régulations en matière de sécurité et sûreté aéronautique imposent que le fonctionnement du SPECS 36 soit indépendant du système de régulation 10. Aussi, le module de surveillance 56 réalise le diagnostique du SPECS 36 mais ne peut pas en modifier le fonctionnement.

La robustesse de l'unité de sélection 38 est assurée par des critères de robustesse que doivent vérifier les changements d'état sur une ou plusieurs entrées de l'unité de sélection 38 pour que la bascule vers l'unité électronique de régulation 32, 34 redondante ait lieu.

Ces critères sont les suivants :
- le changement de sélection de l'unité électronique de régulation 32, 34 doit avoir lieu au plus tard après un laps de temps prédéfini débutant au changement d'un état d'entrée de l'unité de sélection 38,
- un changement d'état d'entrée n'est pris en compte que si le nouvel état sur cette entrée est constant sur une durée minimale, et
- les conditions conduisant à cette modification de la sélection sont maintenues pendant une durée minimale.

Dans l'exemple de la Figure 1, l'unité de sélection 38 est adaptée pour :
- modifier la sélection au plus tard 500ms après un changement d'état d'entrée,
- ne basculer sur l'unité électronique de régulation 32, 34 redondante que si le nouvel état d'entrée est maintenu au moins 10ms et si les conditions conduisant à cette sélection sont maintenues au moins 100ms.

En pratique, le résultat de la sélection est accessible en lecture par les unités électroniques de régulation 32, 34 via un bus auquel celles-ci sont raccordées. L'unité de sélection 38 transmet alors le résultat de la sélection aux deux unités électroniques de régulation 32, 34 par l'intermédiaire d'une séquence de bits codant l'unité électronique de régulation 32, 34 sélectionnée.

Dans l'exemple de la Figure 1, la séquence « 10101 » code la sélection de la première unité électronique de régulation 32, et la séquence « 11011 » code par exemple la sélection de la deuxième unité électronique de régulation 34.

En outre, l'unité de sélection 38 est propre à être diagnostiquée par les unités électroniques de régulation 32, 34.

A cet effet, chaque unité électronique de régulation 32, 34 est raccordée aux entrées de l'unité de sélection 38.

Dans l'exemple de la Figure 1, ces entrées sont accessibles en lecture par les unités électroniques de régulation 32, 34 via un bus de type série auquel elles sont raccordées. La méthode de transmission utilisée est de type différentielle et s'appuie sur un codage de type 8bits/10bits. Cette méthode autorise l'utilisation d'une transformation d'isolation entre chacune des unités électroniques de régulation 32, 34 et l'unité de sélection 38 ainsi qu'une couverture des erreurs de transmission.

Chaque unité électronique de régulation 32, 34 a donc accès à la fois à l'entrée et à la sortie de l'unité de sélection 38. Elles communiquent alors pour comparer les informations reçues de l'unité de sélection 38 et vérifier la cohérence entre les états des entrées de l'unité de sélection 38 et le résultat de la sélection.

L'unité de sélection 38 comprend également un mode de test exhaustif au cours duquel le module de surveillance 56 est aussi testé.

Ce test dit « intrusif » se déroule lors de la phase de démarrage du moteur 12, par exemple lorsque les vitesses mesurées par les différents organes du système de régulation 10 sont toutes inférieures à une valeur prédéfinie de la vitesse nominale du moteur 12, par exemple 25%.

Les unités électroniques de régulation 32, 34 émettent alors à destination de l'unité de sélection 38 des séquences de signaux coordonnés correspondant à divers résultats de sélection attendus de la part de l'unité de sélection 38. Les sorties de l'unité de sélection 38 sont ensuite comparées par les deux unités électroniques de régulation 32, 34 pour déterminer l'état de fonctionnement de l'unité de sélection 38.

En outre, les signaux fréquentiels issus des capteurs de vitesse 14, 16, 18, 20 sont remplacés par des signaux de tests générés par l'unité de sélection 38 afin de tester le comportement du module de surveillance 56.

Lors de ce test intrusif, les unités électroniques de régulation 32, 34 sont autorisées à écrire dans l'unité de sélection 38 pour en modifier le fonctionnement.

Dans le cas d'une panne de l'unité de sélection 38 détectée par les unités électroniques de régulation 32, 34, l'unité électronique de régulation 32, 34 couramment au contrôle est déterminée par le signal de sélection externe émis par le module externe 47.

En pratique, l'unité de sélection 38 est ségréguée des deux unités électroniques de régulation 32, 34.

L'unité de sélection 38 est ainsi isolée mécaniquement et/ou électriquement des deux unités électroniques de régulation 32, 34. Elle dispose également d'une source d'alimentation électrique indépendante ou consolidée à partir des alimentations de chacune des unités électroniques 32, 34.

L'unité de sélection 38 dispose de sa propre source d'horloge indépendante des sources d'horloge utilisées dans les unités électroniques et n'utilise pas de dispositif de type boucle de phase asservie (PLL) afin d'éviter les oscillations sur des fréquences propres de la boucle de phase.

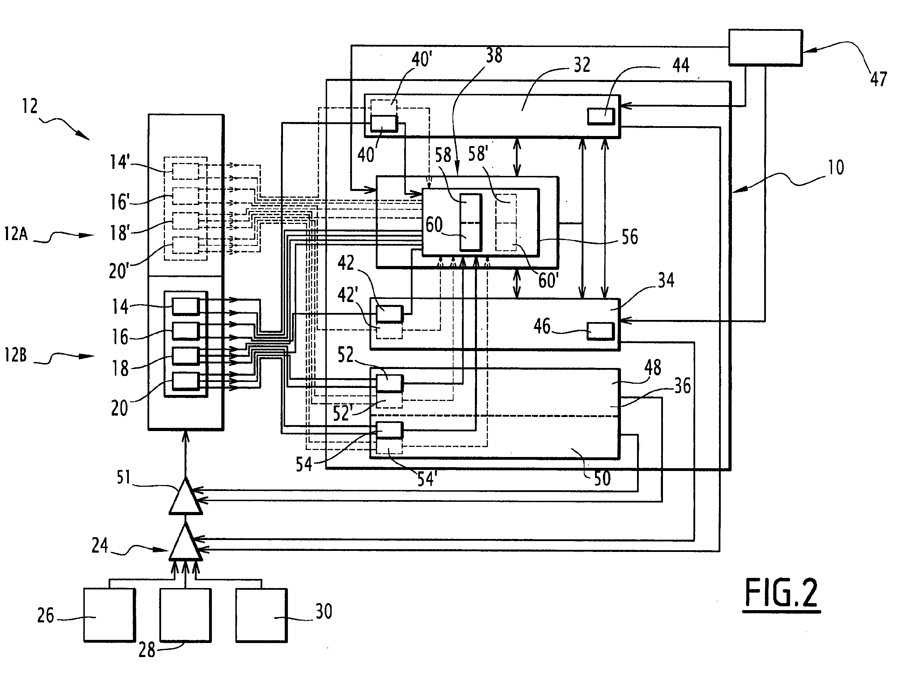

En option, en référence à la Figure 2, le système de régulation 10 est propre à réaliser simultanément la régulation à la fois d'un étage de turbine libre 12B et d'un étage de turbine à gaz 12A que comprend le moteur 12, ces étages ayant des vitesses de rotation indépendantes l'une de l'autre.

A cet effet, outre les organes du système de régulation 10 adapté pour la régulation d'un seul étage de turbine et illustré sur la Figure 1, le système de régulation 10 selon cette variante de l'invention comprend les caractéristiques suivantes.

Les unités électroniques de régulation 32, 34 comprennent respectivement des modules de mesure 40', 42' fournissant des mesures de vitesse de rotation du second étage 12A régulé à partir des sorties de capteurs de vitesse 14', 16' de régulation disposés au contact dudit second étage 12A.

Par ailleurs, chaque voie 48, 50 du SPECS 36 comprend respectivement un module 52', 54' de mesure de vitesse à partir des sorties de deux capteurs de vitesse 18', 20' de protection disposés sur le second étage de turbine 12A. Le SPECS 36 commande alors la coupure de l'arrivée de carburant 26 à l'organe 51 lorsque l'une des mesures de vitesse de l'un des étages 12A, 12B du moteur 12 est supérieure à une valeur seuil fixée.

En outre, le module de surveillance 56 est raccordé aux sorties des capteurs 14', 16', 18', 20' et comprend deux modules 58', 60' de mesure de vitesse raccordés chacun aux sorties des deux capteurs de vitesse 18', 20' de protection.

Le module de surveillance 56 diagnostique alors cycliquement la capacité des unités électroniques de régulation 32, 34 à réguler les deux étages de turbine 12A, 12B simultanément en effectuant les comparaisons de cohérence pour l'un et l'autre des étages de turbine 12A, 12B à partir des sorties des modules de mesure 40, 40', 42, 42', 58, 58', 60, 60' correspondants et des sorties des capteurs de vitesse des deux étages de turbine 12A, 12B.

En outre, le module de surveillance 56 est propre à délivrer au pilote ou à un personnel une information d'état de fonctionnement du SPECS 36 à partir des sorties des modules 52, 52', 54, 54' de mesure de vitesse des voies de pilotage 48, 50 et des sorties des capteurs de vitesse 18, 18', 20, 20' de protection.

En option encore, le module de surveillance 56 réalise le diagnostique des unités électroniques de régulation 32, 34 à partir des sorties d'un nombre quelconque de capteurs de vitesse de régulation et de protection disposés sur les étages de turbine 12B libre et à gaz 12A du moteur 12, à chaque étage de turbine du moteur 12 étant dédié, si le ou chaque capteur de vitesse de régulation correspondant est présent :
- un module 52, 52', 54, 54' de mesure de vitesse par voie de pilotage 48, 50 du SPECS 36,
- un module de mesure 40, 40', 42, 42' de mesure de vitesse par unité électronique de régulation 32, 34, et
- au moins un module 58, 58', 60, 60' de mesure de vitesse pour le module de surveillance 56.

Par exemple, la régulation des étages de turbine libre 12B et à gaz 12A du moteur 12 peut être réalisée simultanément par le système de régulation 10 selon l'invention à partir d'un capteur de vitesse de régulation fournissant une information représentative de la vitesse de rotation de l'étage de turbine libre 12B, et un capteur de vitesse de régulation et deux capteurs de vitesse de protection fournissant des informations représentatives de la vitesse de rotation de l'étage de turbine à gaz 12A du moteur 12.

## Revendications

1. Système (10) de régulation numérique pour moteur (12) d'aéronef du type comprenant :
- deux unités électroniques de régulation (32, 34) redondantes pour la régulation du moteur (12) de l'aéronef, chaque unité électronique de régulation (32, 34) étant adaptée pour déterminer une mesure de vitesse de rotation du moteur (12) à partir d'un signal de sortie d'un capteur de vitesse (14, 16) de régulation respectif représentatif de la vitesse de rotation du moteur (12),
- une unité de sélection (38) pour la sélection de l'une ou l'autre des unités électroniques de régulation (32, 34) pour la régulation du moteur (12) en fonction d'un état de fonctionnement des unités électroniques de régulation (32, 34),
- un système de protection électronique contre les survitesses (36) pour la protection du moteur (12) de l'aéronef contre les survitesses, à partir du signal de sortie d'au moins un capteur de vitesse (18, 20) de protection respectif représentatif de la vitesse de rotation du moteur (12),
**caractérisé en ce que** l'unité de sélection (38) comprend un module de surveillance (56) adapté pour déterminer une mesure de vitesse de rotation du moteur (12) à partir du signal de sortie du ou de chaque capteur de vitesse (18, 20) de protection et pour comparer la ou chaque mesure de vitesse déterminée par le module de surveillance (56) avec les mesures de vitesses fournies par chaque unité électronique de régulation (32, 34) pour déterminer un état de fonctionnement de chaque unité électronique de régulation (32, 34).

2. Système (10) selon la revendication 1, dans lequel le module de surveillance (56) comprend un module de mesure (58, 60) respectif associé à chaque unité électronique (32, 34) de régulation et adapté pour déterminer une mesure de vitesse de rotation du moteur (12) à partir du signal de sortie d'au moins un capteur de vitesse (18, 20) de protection, le module de surveillance (56) étant adapté pour comparer la mesure de vitesse fournie par chaque unité électronique (32, 34) de régulation avec la ou chaque mesure de vitesse déterminée par le module de mesure (58, 60) associé.

3. Système (10) selon l'une quelconque des revendications précédentes, dans lequel le module de surveillance (56) est adapté pour inhiber la sélection d'une unité électronique de régulation (32, 34) si l'unité électronique de régulation (32, 34) ne lui fournit pas de mesure de vitesse.

4. Système (10) selon l'une quelconque des revendications précédentes, dans lequel le module de surveillance (56) est adapté pour inhiber la sélection d'une unité électronique de régulation (32, 34) si la mesure de vitesse fournie par l'unité électronique de régulation (32, 34) au cours d'une période de temps de mesure (P) n'est pas reçue par l'unité de sélection (38) au bout d'une durée prédéterminée ε après le début d'une nouvelle période de temps de mesure (P), ε valant 1 ms par exemple.

5. Système (10) selon l'une quelconque des revendications précédentes, dans lequel le module de surveillance (56) est adaptée pour inhiber la sélection d'une unité électronique de régulation (32, 34) si la mesure de vitesse fournie par l'unité électronique de régulation (32, 34) n'est pas cohérente de deux mesures de vitesse déterminées par l'unité de sélection (38) à partir des signaux de sortie des capteurs de vitesse (18, 20) de protection, alors que les mesures de vitesse déterminées par l'unité de sélection (38) sont cohérentes entre elles.

6. Système (10) selon la revendication 5, dans lequel une mesure de vitesse V1 est cohérente d'une autre mesure de vitesse V2 si (1 - δ) * *V*2 ≤ *V*1 ≤ (1 + δ) * *V*2, δ valant 0,1 par exemple.

7. Système (10) selon l'une quelconque des revendications précédentes, dans lequel le module de surveillance (56) est adapté pour comparer les signaux de sortie des capteurs de vitesse (14, 16) de régulation et les signaux de sortie du ou de chaque capteur de vitesse (18, 20) de protection de manière à vérifier le fonctionnement des capteurs de vitesse (14, 16) de régulation et/ou du ou de chaque capteur de vitesse (18, 20) de protection.

8. Système (10) selon l'une quelconque des revendications précédentes, dans lequel le module de surveillance (56) est actif pour inhiber la sélection de chaque unité électronique de régulation (32, 34) seulement lorsqu'un nombre prédéfini M de mesures de vitesse déterminées par le module de surveillance (56) sont représentatives d'une vitesse de rotation du moteur (12) supérieure à un seuil prédéterminé, par exemple une fraction d'une vitesse de rotation nominale du moteur (12), notamment 40%.

9. Système (10) selon l'une quelconque des revendications précédentes, **caractérisé en ce que** l'unité de sélection (38) comprend un mode de test pour tester module de surveillance (56), dans lequel les unités électroniques de régulation (32, 34) transmettent au module de surveillance (56) des signaux de test à la place de mesures de vitesse.

10. Système (10) selon la revendication 9, **caractérisé en ce que** le mode de test est mis en oeuvre uniquement lorsque les mesures de vitesse déterminées par le module de surveillance (56) et les mesures de vitesse déterminées par les unités électroniques de régulation (32, 34) sont représentatives d'une vitesse de rotation inférieure à un seuil de vitesse de rotation, par exemple une fraction d'une vitesse de rotation nominale du moteur (12), notamment 25%.

11. Système (10) selon l'une quelconque des revendications précédentes, **caractérisé en ce que** l'unité de sélection (38) est paramétrable.

12. Système (10) selon l'une quelconque des revendications précédentes, **caractérisé en ce que** le système de protection contre les survitesses (36) comprend deux voies de pilotage (48, 50) redondantes pour la commande du système de protection contre les survitesses (36), chaque voie de pilotage (48, 50) comprenant au moins un module de mesure (52, 54) de la vitesse du moteur (12) à partir des sorties des capteurs de vitesse (18, 20) de protection, le module de surveillance (56) délivrant une information d'état de fonctionnement du système de protection contre les survitesses (36) à partir des sorties des modules de mesure (52, 54).

13. Système (10) selon l'une quelconque des revendications précédentes, **caractérisé en ce que** l'aéronef est un hélicoptère.

14. Système (10) selon l'une quelconque des revendications précédentes, **caractérisé en ce que** le moteur (12) comprend étage de turbine à gaz (12A) et/ou un étage de turbine libre (12B).

15. Système (10) selon l'une quelconque des revendications précédentes, **caractérisé en ce que** le moteur comprend deux étages de turbine (12A,12B), chaque unité électronique de régulation (32, 34) étant adaptée pour déterminer une mesure de vitesse de rotation de chaque étage de turbine (12A,12B) à partir d'un signal de sortie d'au moins un capteur de vitesse (14, 16, 14', 16') de régulation respectif représentatif de la vitesse de rotation respectivement de chaque étage de turbine (12A,12B) du moteur (12), le système de protection électronique contre les survitesses (36) réalisant la protection du moteur (12) de l'aéronef à partir du signal de sortie d'au moins un capteur de vitesse (18, 20, 18', 20') de protection respectif représentatif de la vitesse de rotation respectivement de chaque étage de turbine (12A,12B) du moteur (12), le module de surveillance (56) étant adapté pour déterminer une mesure de vitesse de rotation de chaque étage de turbine (12A,12B) du moteur (12) à partir du signal de sortie du ou de chaque capteur de vitesse (18, 20, 18', 20') de protection et pour comparer la ou chaque mesure de vitesse déterminée par le module de surveillance (56) avec les mesures de vitesses fournies par chaque unité électronique de régulation (32, 34) pour déterminer un état de fonctionnement de chaque unité électronique de régulation (32, 34)

## Patentansprüche

1. System (10) zur digitalen Regelung für einen Motor (12) eines Luftfahrzeugs, des Typs aufweisend:
- zwei redundante elektronische Regeleinheiten (32, 34) zur Regelung des Motors (12) des Luftfahrzeugs, wobei jede elektronische Regeleinheit (32, 34) angepasst ist zum Bestimmen einer Messung der Drehzahl des Motors (12) ausgehend von einem Ausgangssignal eines jeweiligen Regelungs-Drehzahlsensors (14, 16), das für die Drehzahl des Motors (12) repräsentativ ist,
- eine Auswahl-Einheit (38) zum Auswählen der einen oder der anderen der elektronischen Regeleinheiten (32, 34) zur Regelung des Motors (12) in Abhängigkeit von einem Funktionszustand der elektronischen Regeleinheiten (32, 34),
- ein elektronisches Schutzsystem gegen Überdrehen (36) zum Schutz des Motors (12) des Luftfahrzeugs gegen Überdrehen, ausgehend von einem Ausgangssignal von wenigstens einem jeweiligen Schutz-Drehzahlsensor (18, 20), das für die Drehzahl des Motors (12) repräsentativ ist,
**dadurch gekennzeichnet, dass** die Auswahl-Einheit (38) ein Überwachungsmodul (56) aufweist, das angepasst ist zum Bestimmen einer Messung der Drehzahl des Motors (12) ausgehend von einem Ausgangssignal des oder jedes Schutz-Drehzahlsensors (18, 20) und zum Vergleichen der oder jeder Drehzahlmessung, die durch das Überwachungsmodul (56) bestimmt ist, mit den Drehzahlmessungen, die von jeder elektronischen Regeleinheit (32, 34) geliefert wird, zum Ermitteln eines Funktionszustands jeder elektronischen Regeleinheit (32, 34).

2. System (10) gemäß Anspruch 1, wobei das Überwachungsmodul (56) ein jeweiliges Messmodul (58, 60) aufweist, das der jeweiligen elektronischen Regeleinheit (32, 34) zugeordnet ist und angepasst ist zum Bestimmen einer Drehzahlmessung des Motors (12) ausgehend von dem Ausgangssignal von wenigstens einem Schutz-Drehzahlsensor (18, 20), wobei das Überwachungsmodul (56) angepasst ist zum Vergleichen der Drehzahlmessung, die von jeder elektronischen Regeleinheit (32, 34) geliefert wird, mit der oder jeder Drehzahlmessung, die von dem zugeordneten Messmodul (58, 60) bestimmt ist.

3. System (10) gemäß irgendeinem der vorhergehenden Ansprüche, wobei das Überwachungsmodul (56) angepasst ist zum Unterbinden der Auswahl einer elektronischen Regeleinheit (32, 34), falls die elektronische Regeleinheit (32, 34) ihm nicht die Drehzahlmessung liefert.

4. System (10) gemäß irgendeinem der vorhergehenden Ansprüche, wobei das Überwachungsmodul (56) angepasst ist zum Unterbinden der Auswahl einer elektronischen Regeleinheit (32, 34), falls die Drehzahlmessung, die von der elektronischen Regeleinheit (32, 34) im Laufe eine Messzeitperiode (P) geliefert wird, nicht von der Auswahleinheit (38) empfangen wird am Ende einer vorbestimmten Dauer ε nach dem Anfang einer neuen Zeitmessperiode (P), wobei ε z.B. 1 ms beträgt.

5. System (10) gemäß irgendeinem der vorhergehenden Ansprüche, wobei das Überwachungsmodul (56) angepasst ist zum Unterbinden der Auswahl einer elektronischen Regeleinheit (32, 34), falls die Drehzahlmessung, die von der elektronischen Regeleinheit (32, 34) geliefert wird, nicht kohärent ist zu zwei Drehzahlmessungen, die von der Auswahleinheit (38) bestimmt sind ausgehend von den Ausgangssignalen der Schutz-Drehzahlsensoren (18, 20), obgleich die Drehzahlmessungen, die von der Auswahleinheit (38) bestimmt sind, unter sich kohärent sind.

6. System (10) gemäß Anspruch 5, wobei eine Drehzahlmessung V1 kohärent ist zu einer anderen Drehzahlmessung V2, wenn (1-δ)*V2 ≤ V1 ≤ (1+δ)*V2, wobei δ z.B. 0,1 beträgt.

7. System (10) gemäß irgendeinem der vorhergehenden Ansprüche, wobei das Überwachungsmodul (56) angepasst ist zum Vergleichen der Ausgangssignale des Regelungs-Drehzahlsensors und der Ausgangssignale des oder jedes Schutz-Drehzahlsensors (18, 20), um das Funktionieren des Regelungs-Drehzahlsensors (14, 16) und/oder des oder jedes Schutz-Drehzahlsensors (18, 20) zu verifizieren.

8. System (10) gemäß irgendeinem der vorhergehenden Ansprüche, wobei das Überwachungsmodul (56) aktiv ist zum Unterbinden der Auswahl jeder elektronische Regeleinheit (32, 34) nur wenn eine vordefinierte Anzahl M an Drehzahlmessungen, die von dem Überwachungsmodul (56) bestimmt sind, für eine Drehzahl des Motors (12) repräsentativ sind, die größer ist als eine vorbestimmte Schwelle, z.B. ein Bruchteil einer Soll-Drehzahl des Motors (12), insbesondere 40%.

9. System (10) gemäß irgendeinem der vorhergehenden Ansprüche, **dadurch gekennzeichnet, dass** die Auswahleinheit (38) einen Testmodus aufweist zum Testen des Überwachungsmoduls (56), wobei die elektronischen Regeleinheiten (32, 34) an das Überwachungsmodul (56) Testsignale anstelle von Drehzahlmessungen liefern.

10. System (10) gemäß Anspruch 9, **dadurch gekennzeichnet, dass** der Testmodus einzig durchgeführt wird, wenn die Drehzahlmessungen, die von dem Überwachungsmodul (56) bestimmt sind, und die Drehzahlmessungen, die von den elektronischen Regeleinheiten (32, 34) bestimmt sind, für eine Drehzahl repräsentativ sind, die kleiner ist als eine DrehzahlSchwelle, z.B. ein Bruchteil einer Soll-Drehzahl des Motors (12), insbesondere 25%.

11. System (10) gemäß irgendeinem der vorhergehenden Ansprüche, **dadurch gekennzeichnet, dass** die Auswahleinheit (38) parametrierbar ist.

12. System (10) gemäß irgendeinem der vorhergehenden Ansprüche, **dadurch gekennzeichnet, dass** das Schutzsystem gegen Überdrehen (36) aufweist zwei redundante Leitungswege (48, 50) zur Steuerung des Schutzsystems gegen Überdrehen (36), wobei jeder Leitungsweg (48, 50) aufweist wenigstens ein Modul zum Messen (52, 54) der Drehzahl des Motors (12) ausgehend von den Ausgängen der Schutz-Drehzahlsensoren (18, 20), wobei das Überwachungsmodul (56) eine Information des Funktionszustands des Schutzsystems gegen Überdrehen (36) liefert ausgehend von den Ausgängen der Messmodule (52, 54).

13. System (10) gemäß irgendeinem der vorhergehenden Ansprüche, **dadurch gekennzeichnet, dass** das Luftfahrzeug ein Helikopter ist.

14. System (10) gemäß irgendeinem der vorhergehenden Ansprüche, **dadurch gekennzeichnet, dass** der Motor (12) eine Gasturbinenstufe (12A) und/oder eine Arbeitsturbinenstufe (12B) aufweist.

15. System (10) gemäß irgendeinem der vorhergehenden Ansprüche, **dadurch gekennzeichnet, dass** der Motor zwei Turbinenstufen (12A, 12B) aufweist, wobei jede elektronische Regeleinheit (32, 34) angepasst ist zum Bestimmen einer Drehzahlmessung von jeder Turbinenstufe (12A, 12B) ausgehend von einem Ausgangssignal von wenigstens einem jeweiligen Regelungs-Drehzahlsensor (14, 16, 14', 16`), das repräsentativ ist für die jeweilige Drehzahl von jeder Turbinenstufe (12A, 12B) des Motors (12), wobei das elektronische Schutzsystem gegen Überdrehen (36) den Schutz des Motors (12) des Luftfahrzeugs realisiert ausgehend von dem Ausgangssignal des wenigstens einen jeweiligen Schutz-Drehzahlsensors (18, 20, 18', 20`), welches repräsentativ ist für die jeweilige Drehzahl jeder Turbinenstufe (12A, 12B) des Motors (12), wobei das Überwachungsmodul (56) angepasst ist zum Bestimmen einer Messung der Drehzahl jeder Turbinenstufe (12A, 12B) des Motors (12) ausgehend von dem Ausgangssignal des oder jedes Schutz-Drehzahlsensors (18, 20, 18`, 20') und zum Vergleichen der oder jeder Drehzahlmessung, die von dem Überwachungsmodul (56) bestimmt ist, mit den Drehzahlmessungen, die von jeder elektronischen Regeleinheit (32, 34) geliefert werden, zum Ermitteln des Funktionszustands jeder elektronischen Regeleinheit (32, 34).

## Claims

1. A digital engine control system (10) for an aircraft engine (12) comprising:
- two redundant electronic control units (32, 34) to control the engine (12) of the aircraft, each electronic control unit (32, 34) being adapted to determine a speed measurement of the engine (12) from an output signal from a respective speed sensor (14, 16) representative of the speed of the engine (12),
- a selection unit (38) to select one or the other of the electronic control units (32, 34) to control the engine (12) as a function of an operating state of the electronic control units (32, 34),
- an electronic overspeed protection system (36) to protect the engine (12) of the aircraft from overspeeds, from the output signal from at least one respective protection speed sensor (18, 20) representative of the speed of the engine (12),
**characterized in that** the selection unit (38) comprises a monitoring module (56) adapted to determine a speed measurement of the engine (12) from the output signal from the or each protection speed sensor (18, 20) and compare the or each speed measurement determined by the monitoring module (56) with the speed measurements supplied by each electronic control unit (32, 34) to determine an operating state of each electronic control unit (32, 34).

2. The system (10) according to claim 1, wherein the surveillance module (56) comprises a respective measurement module (58, 60) associated with each electronic control unit (32, 34) and adapted to determine a speed measurement of the engine (12) from the output signal from at least one protection speed sensor (18, 20), the monitoring module (56) being adapted to compare the speed measurements supplied by each electronic control unit (32, 34) with the or each speed measurement determined by the associated measuring module (58, 60).

3. The system (10) according to any one of the preceding claims, wherein the monitoring module (56) is adapted to inhibit the selection of an electronic control unit (32, 34) if the electronic control unit (32, 34) does not provide the monitoring module (56) with a speed measurement.

4. The system (10) according to any one of the preceding claims, wherein the monitoring module (56) is adapted to inhibit the selection of an electronic control unit (32, 34) if the speed measurement supplied by the electronic control unit (32, 34) over a measurement time period (P) is not received by the selection unit (38) after a predetermined length of time ε after the beginning of a new measurement time period (P), ε for example equal to 1 ms.

5. The system (10) according to any one of the preceding claims, wherein the monitoring module (56) is adapted to inhibit the selection of an electronic control unit (32, 34) if the speed measurement supplied by the electronic control unit (32, 34) is not consistent with two speed measurements determined by the selection unit (38) from output signals from the protection speed sensors (18, 20), whereas the speed measurements determined by the selection unit (38) are consistent with one another.

6. The system (10) according to claim 5, wherein a speed measurement V1 is consistent with another speed measurement V₂ if (1- δ) * *V*2 ≤ *V*1 ≤ (1 + δ) * *V*2 , δ being equal to 0.1 for example.

7. The system (10) according to any one of the preceding claims, wherein the monitoring module (56) is adapted to compare the output signals from the control speed sensors (14, 16) and the output signals from the or each protection speed sensor (18, 20) so as to verify the operation of the control speed sensors (14, 16) and/or the or each protection speed sensor (18, 20).

8. The system (10) according to any one of the preceding claims, wherein the monitoring module (56) is active to inhibit the selection of each electronic control unit (32, 34) only when a predefined number M of speed measurements determined by the monitoring module (56) are representative of a speed of rotation of the engine (12) above a predetermined threshold, for example a fraction of a nominal speed of rotation of the engine (12), in particular 40%.

9. The system (10) according to any one of the preceding claims, **characterized in that** the selection unit (38) comprises a test mode to test the monitoring module (56), in which the electronic control units (32, 34) send the monitoring module (56) test signals in place of speed measurements.

10. The system (10) according to claim 9, **characterized in that** the test is implemented only when the speed measurements determined by the monitoring module (56) and the speed measurements determined by the electronic control units (32, 34) are representative of a speed of rotation below a threshold speed of rotation, for example a fraction of a nominal speed of rotation of the engine (12), in particular 25%.

11. The system (10) according to any one of the preceding claims, **characterized in that** the selection unit (38) is configurable.

12. The system (10) according to any one of the preceding claims, **characterized in that** the overspeed protection system (36) comprises two redundant control paths (48, 50) to control the overspeed protection system (36), each control path (48, 50) comprising at least one measurement module (52, 54) for measuring the speed of the engine (12) from the outputs of the protection speed sensors (18, 20), the monitoring module (56) providing information on the operating state of the overspeed protection system (36) from the outputs of the measuring modules (52, 54).

13. The system (10) according to any one of the preceding claims, **characterized in that** the aircraft is a helicopter.

14. The system (10) according to any one of the preceding claims, **characterized in that** the engine (12) comprises a gas turbine stage (12A) and/or a free turbine stage (12B).

15. The system (10) according to any one of the preceding claims, **characterized in that** the engine comprises two turbine stages (12A, 12B), each electronic control unit (32, 34) being adapted to determine a speed of rotation measurement of each turbine stage (12A, 12B) from an output signal from at least one respective control speed sensor (14, 16, 14', 16') representative of the speed of rotation of each turbine stage (12A, 12B) of the engine (12), respectively, the electronic overspeed protection system (36) protecting the engine (12) of the aircraft using the output signal from at least one respective protection speed sensor (18, 20, 18', 20') representative of the speed of rotation of each turbine stage (12A, 12B) of the engine (12), respectively, the monitoring module (56) being adapted to determine a speed of rotation measurement of each turbine stage (12A, 12B) of the engine (12) using the output signal from the or each protection speed sensor (18, 20, 18', 20') and compare the or each speed measurement determined by the monitoring module (56) with the speed measurements provided by each electronic control unit (32, 34) to determine an operating state of each electronic control unit (32, 34).
